Europäisches Patentamt

European Patent Office

Office européen des brevets

(11) Publication number: **0 405 663 A1**

# EUROPEAN PATENT APPLICATION

(21) Application number: 90201636.9

(51) Int. Cl.⁵: **B29C 45/23**, B29C 45/17

(22) Date of filing: 21.06.90

(30) Priority: 26.06.89 NL 8901609
25.08.89 NL 8902167

(43) Date of publication of application:
02.01.91 Bulletin 91/01

(84) Designated Contracting States:
AT BE CH DE DK ES FR GB GR IT LI LU NL SE

(71) Applicant: STORK PLASTICS MACHINERY B.V.
Industrieplein 3
NL-7553 LL Hengelo(NL)

(72) Inventor: Hagen, Antonius Lambertus Maria
G. Peuscherstraat 57
NL-7558 BB Hengelo(NL)
Inventor: Van den Berg, Frans Johan
Steinwegstraat 37
NL-7491 KJ Delden(NL)

(74) Representative: Hoijtink, Reinoud et al
OCTROOIBUREAU ARNOLD & SIEDSMA
Sweelinckplein 1n 1
NL-2517 GK Den Haag(NL)

(54) Injector head.

(57) Injector head (1) for plastics with a centrally arranged channel (2). The outflow end (3) of the channel (2) can be closed off by a needle (5) held in a sleeve-shaped guide (4). In the needle (5) a bore (6) is provided for applying fluid in order to prevent shrinkage of the injection-moulded products. The needle (5) is displaced by means of a pivotably supported operating lever (10) engaging in a recess (8) of the needle (5), whereas the needle (5) is biased by the pressure of the plastic. The needle (5) extends to a point outside the outflow end (3) so that the outer end (18) is located beyond the heated zone.

FIG.1

## INJECTOR HEAD

The invention relates to an injector head for plastics with a centrally arranged channel, the outflow end of which is adapted of being closed off by a needle held in a sleeve-shaped guide, and with a bore in the needle which can be connected to a feeder line for fluid.

An injector head of this kind is known from DE-A-27 16 817.

Such an injector head is used for forming injection-moulded products which are free of shrinkage defects. This is done by the introduction during the cooling of plastic which has been injected into a mould of pressurized fluid so that the layer of plastic is held forcibly against the wall of the mould. This is carried out as follows. Plastic is delivered to the mould through the centrally arranged channel. After the introduction of plastic, the outflow end of the channel is closed off by an axial movement of the needle, and then pressurized fluid is supplied through the bore to the mould for some additional time. Next the fluid supply is closed off and the injector head is ready for a following cycle.

In the case of the known injector head, to obtain a movement of the needle, use is made of an actuating system consisting of an operating lever which is driven by piston/cylinder system. With this construction, relatively large forces have to be exerted to obtain the movement of the needle, since during the closure of the outflow opening the needle experiences a counterforce caused by the pressure in the outflowing plastic.

In order to prevent the plastic flowing back through the bore, a valve system is applied.

The above arrangements have resulted in a complex construction.

The present invention has for its object to provide a simpler construction which offers a greater degree of reliability.

During the reduction of the fluid pressure an under-pressure arises, such that there is a risk that . the plastic material which is present at the outflow end and which -considering that the outflow end is heated - is in a fluid state will be sucked inwards. This can give rise to contaminating and clogging of the bore in the needle. It is the object of the invention to obviate this disadvantage.

This is achieved according to the invention by the presence of a lateral recess in the needle and of a pivotably supported operating lever which engages in that recess. According to the invention a simple, easily-drivable pivoted lever is sufficient.

The force required for operation of the lever can be very low if the needle is maintained under a pre-loading force in the direction of the closing position. In that case the pressure of the outflowing plastic is practically wholly compensated by the pre-loading force, so that the lever has to overcome no more than the force caused by the friction of the needle in the sleeve-shaped guide.

According to the invention the needle extends to a point outside the outflow end. The extremity of the needle is thus located beyond the heated zone near the outflow end and may optionally extend into the mould. The temperature in the mould is held - for example by forced cooling - lower than at a point next to the outflow end of the injector head, in order to bring the plastic material into the solid phase. The temperature in the zone between the outflow end and the mould displays a gradual reduction. By allowing the extremity of the needle to reach beyond the outflow end by a distance such that this part is located in a zone with a relatively low temperature, the risk that melted plastic material is still present at that point is eliminated.

The said pre-loading force can be achieved in a simple way by deriving this force from the pressure of the plastic. To this end, it is recommended that the sleeve-shaped guide extends in an axial direction along only part of the needle, in such a manner that the channel for the plastic continues up to both end zones of the needle. Both end zones of the needle are thus exposed to the pressure in the plastic, so that the resultant forces nearly cancel each other out.

The recess can extend over the whole cross section of the needle. In this case the needle consists of two parts. The feeder line for fluid may be capable of closure by a valve. Additionally, it is possible for the feeder line to be decoupled from the bore for the releasing of the (for example) gaseous fluid.

In order to prevent backflow of plastic through the bore, it is recommended that the bore be provided with a non-return valve. This non-return valve can consist simply of sintered porous material.

During the manufacture of hollow objects it is also possible to feed plastic material and fluid to the mould simultaneously.

The invention will be elucidated by reference to a drawing of an embodiment.

In the drawing

Figure 1 shows a cross-sectional view of the injector head with the needle in the channel-closed position, and

Figure 2 shows a similar view to figure 1 in which however the needle is in the open position.

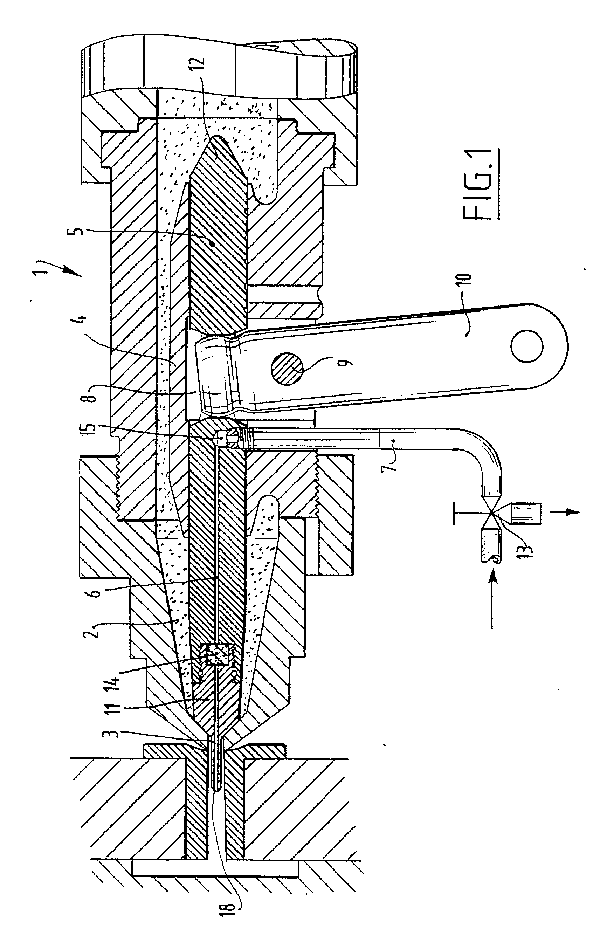

The injector head 1 for plastic has a channel 2 located centrally within the head. The channel 2 has an outflow end 3 for the discharge under pressure of plastic from the channel 2. A needle 5 is held slidingly in a sleeve-shaped guide 4. In the position shown in figure 1, the needle 5 closes off the outflow opening 3 of the channel 2. In the needle 5 there is arranged a bore 6 which can be connected to a feed line 7 for fluid, for instance a pressurized gas.

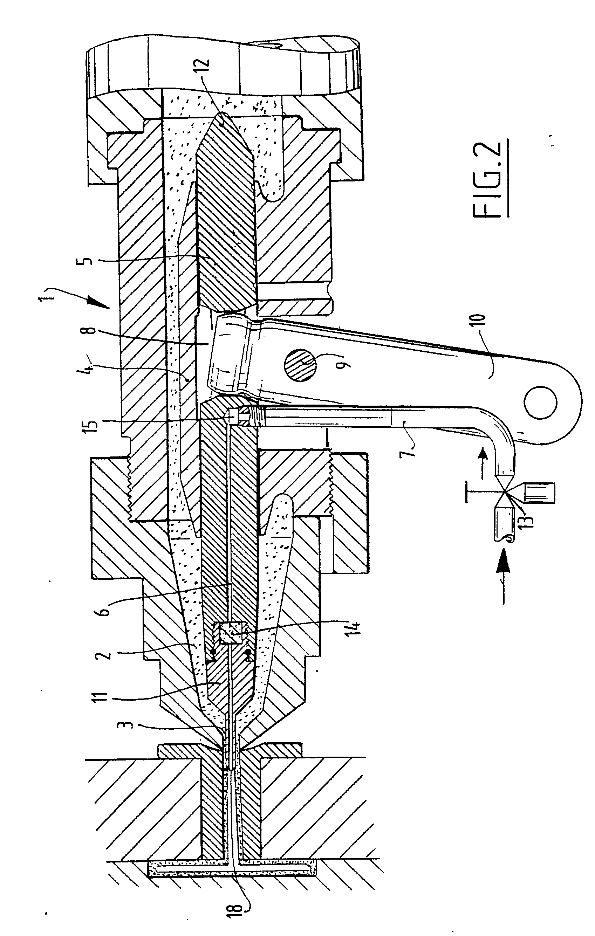

The needle is axially movable by means of the operating lever 10 which is pivotable around a centre of rotation 9 between the positions shown in figures 1 and 2 respectively, and which engages by means of a ball-shaped end part in a recess 8 of the needle. The recess 8 can extend over the whole cross-section of the needle 5, so that the latter consists of two parts, as shown in the drawing. The sleeve-shaped guide 4 extends over only a part of the length of the needle 5. As a result of this, the channel 2 extends to both end zones of the needle so that the two end zones 11 and 12 respectively are subjected to the pressure of the plastic. The forces generated by this compensate mutually in part or in whole. For operation of the needle, the lever 10 has only to overcome the frictional force experienced by the needle 5 in the sleeve 4 during its motion. To prevent the return flow of plastic through the bore 6 , there is arranged a non-return valve 14 in the form a piece of sintered porous material. For the interruption or alternatively the releasing of the gas flow, the feeder line 7 is provided with a valve 13. Another possibility is to disconnect the feeder line from the bore 6 by withdrawing it from the appropriate feeder opening 15.

The end portion 18 of the needle 5 extends to outside the outflow end 3 and is thus situated in a zone of lower temperature, such that the risk that plastic material flows into the bore 6 after the cessation of the gas pressure in the bore is countered.

## Claims

1. Injector head (1) for plastics with a centrally placed channel (2), the outflow end (3) of which is capable of being closed off by a needle (5) held in a sleeve-shaped guide (4), and with a bore (6) in the needle (5) which can be connected to a feeder line (7) for fluid, **characterized** in that the needle (5) has a lateral recess (8) and that a pivotably (9) supported operating lever (10) engages in that recess (8).

2. Injector head (1) as claimed in claim 1, **characterized** in that the needle (5) is subjected to a pre-loading force in the direction of the closed position and extends to a point outside the outflow end, and

in that the said pre-loading force is supplied by the pressure of the plastic.

3. Injector head (1) as claimed in claims 1-2, **characterized** in that the sleeve-shaped guide (4) extends in an axial direction along only part of the needle (5) and that the channel (2) for the plastic continues up to both end zones (11 and 12 respectively) of the needle (5).

4. Injector head (1) as claimed in claim 1, **characterized** in that the recess (8) extends over the whole cross section of the needle.

5. Injector head (1) as claimed in claims 1-4, **characterized** in that the feeder line (7) is closable by a valve (13).

6. Injector head (1) as claimed in claims 1-4, **characterized** in that the feeder line (7) is disconnectable from the bore (6).

7. Injector head (1) as claimed in claims 1-6, **characterized** in that the bore (6) is provided with a non-return valve (14).

8. Injector head (1) as claimed in claim 7, **characterized** in that the non-return valve (14) consists of sintered porous material.

FIG.1

EP 0 405 663 A1

FIG.2

EP 0 405 663 A1

European Patent Office

**EUROPEAN SEARCH REPORT**

Application Number

EP 90 20 1636

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | PATENT ABSTRACTS OF JAPAN, vol. 10, no. 333 (M-534)[2389], 12th November 1986; & JP-A-61 137 717 (MITSUBISHI HEAVY IND. LTD) | 1-3 | B 29 C 45/23 B 29 C 45/17 |
| A | IDEM | 4 | |
| Y | FR-A-2 355 644 (BELOIT CORP.) * Page 6, line 32 - page 7, line 4; figure 1 * | 1 | |
| Y | US-A-3 915 358 (HEHL) * Whole document * | 1 | |
| Y | GB-A-1 306 697 (AOKI) * Page 2, lines 60-80; figures 1,2 * | 1 | |
| Y | US-A-2 940 123 (BECK) * Column 2, line 45 - column 3, line 2; figures 2,3 * | 1,7,8 | |
| Y | DE-A-1 929 343 (WERKZEUGBAU FUCHSLOCHER) * Whole document * | 1,5 | TECHNICAL FIELDS SEARCHED (Int. Cl.5) B 29 C |
| D,Y | DE-A-2 716 817 (ASAHI-DOW) * Page 16, line 7 - page 17, line 23; figures 1,3,4,9 * | 1,7 | |
| Y | FR-A-1 524 962 (SOC. DE MECANIQUE ET D'OUTILLAGE DE PRECISION) * Figure * | 2,3 | |
| Y | US-A-4 129 635 (YASUIKE) * Column 4, lines 19-26; figure 1 * | 5,7 | |
| A | -/- | 2 | |

The present search report has been drawn up for all claims

| Place of search | Date of completion of the search | Examiner |
|---|---|---|
| THE HAGUE | 27-09-1990 | BOLLEN J.A.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | GB-A-1 462 622  (CLEAREX PLASTICS) <br> * Whole document * <br> --- | 8 | |
| Y | FR-A-1 096 143  (PONCET) <br> * page 2, left-hand column, lines 12-17; figures 1,2 * <br> ----- | 2 | |
| | | | TECHNICAL FIELDS SEARCHED (Int. Cl.5) |

The present search report has been drawn up for all claims

| Place of search | Date of completion of the search | Examiner |
|---|---|---|
| THE HAGUE | 27-09-1990 | BOLLEN J.A.G. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................................
& : member of the same patent family, corresponding
    document

EPO FORM 1503 03.82 (P0401)